# EUROPEAN PATENT APPLICATION

(11) **EP 4 362 522 A1**
(43) Date of publication of application: **01.05.2024**
(21) Application number: 23204317.4
(22) Date of filing: 18.10.2023
(51) Int. Cl.: H04W 12/50, H04W 36/06, H04W 84/12, H04W 12/06

(54) **SYSTEM FOR AND METHOD OF DEAUTHENTICATION OR DISASSOCIATION FOR A CONNECTION**

(30) Priority: 30.10.2022 IN 202221061746; 31.03.2023 US 202318194325
(71) Applicant: Avago Technologies International Sales Pte. Limited, Singapore 768923 (SG)
(72) Inventor: Krishnapandi, Pandiyaraja, Irvine, 92618 (US); K, Mahesh Dutta H, Irvine, 92618 (US); Sahoo, Jimut Ranjan, Irvine, 92618 (US); Buhari, Nizamudeen Mohamed, Irvine, 92618 (US); Swami, Anand Kumar, Irvine, 92618 (US)
(74) Representative: Bosch Jehle Patentanwaltsgesellschaft mbH

(57) **Abstract**

Systems and methods can advantageously provide deauthentication/disassociation frames A method includes providing, by a first device, a disassociation frame or a deauthentication frame on a first primary control channel in response to an indication of a change from the first primary control channel to a second primary control channel, and receiving, by the first device, a data frame from a second network device on the first control primary channel, the second primary control channel or a secondary channel. The method also includes providing, by the first device, another disassociation frame or deauthentication frame on the first primary control channel, the second primary control channel and/or the secondary channel associated with the data frame.

## Description

This application claims the benefit of and priority to Indian Provisional Application No. 202221061746, filed on October 30, 2022, the entire disclosure of which is hereby incorporated by reference herein.

This disclosure generally relates to systems for and methods of communication between an access point (AP) and a client device (e.g., a station (STA)) or between other communication devices. In some embodiments, this disclosure generally relates to systems for and methods of deauthentication or disassociation for a connection.

In the last few decades, the market for wireless communications devices has grown by orders of magnitude, fueled by the use of portable devices, and increased connectivity and data transfer between all manners of devices. Digital switching techniques have facilitated the large scale deployment of affordable, easy-to-use wireless communication networks. Furthermore, digital and radio frequency (RF) circuit fabrication improvements, as well as advances in circuit integration and other aspects have made wireless equipment smaller, cheaper, and more reliable. Wireless communication can operate in accordance with various standards such as IEEE 802.11x, Bluetooth, global system for mobile communications (GSM), code division multiple access (CDMA). As higher data throughput and other changes develop, newer standards are constantly being developed for adoption, such as a progression from IEEE 802.11n to IEEE 802.11ac.

Authentication and association under 802.11 standards provides a method for supplying different levels of access to client devices in a network. Connection between an AP and a STA must generally be authenticated and associated with an AP before data packets can be exchanged using the connection. Each client device and AP maintains an authentication state and an association state with each other client device and AP that shares a connection. The connections must generally be deauthenticated and disassociated when the connections need to be or are cancelled. The protocols for authenticating/deauthenticating and associating/deassociating connections can contribute to communication overhead.

Authentication refers to a procedure for how a client device gains access to the network. Authentication provides proof of identity to ensure the client is allowed access to the network. Association refers to a procedure for a client device that has been authenticated to become associated with an AP. Association allows the network to determine where to send data that is intended for a client device (e.g., data is sent through the AP with which the client device is associated). Generally, a client device is only associated with a single AP.

According to an aspect, a device is provided, comprising:
circuitry configured to provide a disassociation frame or a deauthentication frame on a first primary control channel in response to an indication of a change from the first primary control channel to a second primary control channel and to provide another disassociation frame or deauthentication frame on the first primary control channel, the second primary control channel or a secondary channel in response receiving a data frame on the first control primary channel, the second primary control channel or the secondary channel from another device.

Advantageously, the another disassociation frame or deauthentication frame is provided as a deauthentication/disassociation frame.

Advantageously, the circuitry is configured to provide the disassociation frame or deauthentication frame according to an 802.11 protocol.

Advantageously, the circuitry is configured to provide the another deauthentication frame as a deauthentication/disassociation frame.

Advantageously, the circuitry is configured to provide the disassociation frame or deauthentication frame according to an 802.1 1e protocol.

Advantageously, the data frame is provided in a first channel comprising the first primary control channel, the second primary control channel or the secondary channel associated with the data frame.

Advantageously, the circuitry is configured to provide an acknowledge frame on one of the first primary control channel, the second primary control channel or the secondary channel in response to the data frame.

Advantageously, the data frame is a class 3 frame.

Advantageously, the data frame is a class 2 frame.

According to an aspect, a device is provided, comprising:
circuitry configured to provide a disassociation frame or a deauthentication frame on a first primary control channel in response to an indication of a change of operation of the device from the first primary control channel to a second primary control channel, wherein the circuitry is: 1) configured to provide another disassociation frame or deauthentication frame on at least one of the first primary control channel, the second primary control channel or a secondary channel in response to a deauthenticated frame or disassociated frame being received on the at least one of the first primary control channel, the second primary control channel or the secondary channel; or 2) configured to provide the another disassociation frame or deauthentication frame on each of the first primary control channel, the second primary control channel or the secondary channel in response to the deauthenticated or disassociated frame being received on any of the first primary control channel, the second primary control channel or the secondary channel.

Advantageously, the device is an access point configured to provide communication according to an 802.11 protocol.

Advantageously, the circuitry is configured to provide the another disassociation frame or deauthentication frame with an indication that the deauthenticated or disassociated frame has been received;

Advantageously, the circuitry is configured to provide the another disassociation frame or deauthentication frame on one of the first primary control channel, the second primary control channel or the secondary channel in response to the deauthenticated or disassociated frame being received on one of the first primary control channel, the second primary control channel or the secondary channel.

Advantageously, the circuitry is configured to provide the another disassociation frame or deauthentication frame on each of the first primary control channel, the second primary control channel or the secondary channel in response to the deauthenticated or disassociated frame being received on any of the first primary control channel, the second primary control channel or the secondary channel.

Advantageously, the circuitry is part of a media access layer or a physical layer, wherein the device is an access point for an 802.11 standard wireless network.

Advantageously, the data frame is a class 3 frame or a class 2 frame.

According to an aspect, a method is provided, comprising:
providing, by a first device, a disassociation frame or a deauthentication frame on a first primary control channel in response to an indication of a change from the first primary control channel to a second primary control channel;
receiving a data frame, by the first device, from a second device on the first primary control channel, the second primary control channel or a secondary channel of a plurality of secondary channels, wherein the first primary control channel, the second primary control channel and the plurality of secondary channels are at least part of a bandwidth channel; and
providing, by the first device, another disassociation frame or deauthentication frame on at least one of the first primary control channel, the second primary control channel and the plurality of secondary channels.

Advantageously, the first primary control channel, the second primary control channel, and the secondary channels form the first channel.

Advantageously, the another disassociation frame or deauthentication frame is provided in response to receiving the data frame, the data frame being a deauthenticated or disassociated data frame.

Advantageously, the another disassociation frame or deauthentication frame is provided as a broadcast disassociation frame or deauthentication frame.

### Brief Description of the Drawings

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1A is a block diagram depicting a network environment including one or more access points in communication with one or more devices or stations, according to some embodiments.
FIGS. 1B and 1C are block diagrams depicting computing devices useful in connection with the methods and systems described herein, according to some embodiments.
FIG. 2A is a block diagram depicting a network including access points (APs) and stations (STAs), according to some embodiments.
FIG. 2B is a more detailed block diagram of an AP configured for disassociation/deauthentication operations according to some embodiments.
FIG. 3 is a block diagram of a wider bandwidth including subbands for use in the network illustrated in FIG. 2A, according to some embodiments.
FIG. 4 is a block diagram showing a disassociation/deauthentication operation for use in the network illustrated in FIG. 2A.
FIG. 5 is a block diagram showing a disassociation/deauthentication operation for use in the network illustrated in FIG. 2A, according to some embodiments.
FIG. 6 is a flow diagram illustrating an example disassociation/deauthentication operation for the network illustrated in FIG. 2A, according to some embodiments.

The details of various embodiments of the methods and systems are set forth in the accompanying drawings and the description below.

### Detailed Description

The following IEEE standard(s), including any draft versions of such standard(s), are hereby incorporated herein by reference in their entirety and are made part of the present disclosure for all purposes: WiFi Alliance standards and IEEE 802.11 standards including but not limited to IEEE 802.11a^{™}, IEEE 802.11b^{™}, IEEE 802.11g^{™}, IEEE P802.11n^{™}; and IEEE P802.11ac^{™} standards. Although this disclosure can reference aspects of these standard(s), the disclosure is in no way limited by these standard(s).

For purposes of reading the description of the various embodiments below, the following descriptions of the sections of the specification and their respective contents can be helpful:
- Section A describes a network environment and computing environment which can be useful for practicing embodiments described herein; and
- Section B describes embodiments of deauthentication and disassociation protocols and methods and devices using access protocols.

Various embodiments disclosed herein are related to a protocol for deauthenticating or disassociating a connection on a network or for a point to point connection. The connection can be on a subband of a wider bandwidth. The connections can be wireless connections to or from a client device (e.g., a STA) or AP or can be between other types of communication devices. The client device or AP can be implemented in a device comprised of one or more integrated circuits (ICs) packaged in an IC package. In some embodiments, an AP is configured to provide deauthentication or disassociation so that transmission of unnecessary frames is prevented. In some embodiments, the AP is configured to avoid deadlock situations where a client device remains in a connected state on a previously used primary subband or channel of the AP without having a valid data connection because the AP is no longer available on the previously used primary subband or channel.

A channel may refer to any portion of the electromagnetic spectrum used to communicate data. The portions can have various bandwidths and can be combined to form wider bandwidths or channels. Channels can have 5 MHz spacing about a center frequency and can occupy a band of at least 20 MHz in some embodiments.

A disassociation may refer to procedure where a client device is no longer associated with an AP in some embodiments. Disassociation prevents the AP from continuing to attempt to transmit data to the client device after the connection is cancelled in some embodiments. Disassociation generally involves the sending of a disassociation frame or message from the AP to the client device or from the client device to the AP in some embodiments. A client device can be disassociated from an AP while still maintaining authentication on the network. A deauthentication may refer to a procedure that disallows any further service to be provided to a client device in some embodiments. Deauthentication generally involves the sending of a deauthentication frame or message from the AP to the client device or from the client device to the AP in some embodiments.

According to some example network operations, an AP can be forced to change its primary control channel to one of the sub-band channels within the same wider bandwidth (e.g., 40/80/160/320 MHz subbands or channels). When this occurs, the AP sends a broadcast deauthentication/disassociation frame to disconnect all client devices connected to the AP in the original primary control channel so that the client devices can reconnect to the AP on the new primary control channel. However, if the client device is in a sleep mode at the time the AP transmits the deauthentication/disassociation frames, the client device does not receive the deauthentication/disassociation frames and considers the association with the AP is still valid on the original primary channel when the client device wakes up (e.g., comes out of the sleep mode). When this occurs, the client device continues to send data frames (e.g., uplink data traffic) on the associated wider bandwidth. When the AP sees these data frames from the client device due to its wider bandwidth reception and the receiver address (RA) match, the AP sends the ACK/BlockACK frames on the sub-band channels where the data frames are received followed by deauthentication frames only on its current primary control channel (e.g., the new primary control channel). Although STAs and APs can listen on the entire wider bandwidth (e.g., 40/80/160/320 MHZ bandwidths), management frames including but not limited to beacon, probe response, deauthentication/disassociation frames are received at the STAs only if those frames are transmitted on the primary control channel (e.g., 20MHz subband) of the wider bandwidth and all other management frames that are transmitted in the non-primary control channels are generally filtered out at the physical layer of the STA.

The deauthentication frame can be sent with reason 7 (Class 3 frame received from non-associated station) as described in the IEEE 802.11 spec under section 11.3.4.1. Other client devices receive these ACK/BlockACK frames from the AP as these ACK/BlockACK frames are received on the associated primary channels and the client devices assume that the AP is still available in the vicinity but that the AP is not available on the associated primary control channel anymore. The client device that was asleep generally does not receive the follow-up deauthentication frames from AP since the AP is transmitting deauthentication frames only on its current primary control channel which does not overlap with the original primary control channel. This sequence of transmissions can continue for a long time (e.g., without end) and can lead to a deadlock situation where the client device remains in the connected state on the previous or original primary control channel of the AP without having a real valid data connection because the AP is no longer available on the associated primary control channel. This situation can cause a possible security issue, makes a device under test vulnerable to denial of service attacks (DOS) attacks, and wastes communication overhead.

A primary control channel may refer to a channel in a bandwidth of a larger channel (e.g., wider bandwidth) that includes a secondary bandwidth channel or secondary channel in some embodiments. In some embodiments, the primary control channel uses an upper half or lower half of the bandwidth of the wider channel, and the secondary channel uses the remaining half of the bandwidth of the wider channel. In some embodiments, the bandwidths of the primary bandwidth channel and the secondary bandwidth channel are not equal, and the primary control channel occupies a subband and one or more secondary channels occupy the remaining subbands in the wider bandwidth. In some embodiments, the secondary channel has more or less bandwidth than the primary control channel. In some embodiments, the primary control channel is used for client devices that only support a smaller channel bandwidth (e.g., 20 MHz) while the primary control channel and the secondary channel(s) can be used for client devices that support wider channel capabilities. In some embodiments, there are multiple secondary bandwidth channels and a single primary bandwidth channel, each having the same bandwidth. The terms primary and secondary do not connote a specific priority and can be interchanged with first and second and vice versa in some embodiments.

In some embodiments, the primary control channel is a common channel of operation for all stations (STAs) that are members of the basic service set (BSS). For example, in a 20 MHz, 40 MHz, 80 MHz, 160 MHz or 80+80 MHz, 320 MHz bandwidth BSS, the primary control channel is a 20 MHz channel. The primary control channel is used for transmitting all the management frames while the secondary channels are neighboring channels of the primary control channel in some embodiments. The secondary channels can combine with the primary channel to form another primary channel of the next wider bandwidth. A primary control channel may refer to any channel used to send and receive management frames including but not limited to beacon frames, probe request/response frames, authentication request/response frames, association request/response frames, deauthentication frames, disassociation frames, etc.

A sleep mode may refer to a mode of operation where a device communicating on a network reduces its communication usually to save power. In some embodiments, a sleep mode may involve the device being incapable of receiving or transmitting data for a portion of a predetermined time period. As used herein, a frame refers to a digital data transmission unit. For example, a frame may refer to a container for a single network packet. A data frame may refer to a frame that contains data. A deauthentication frame may refer to a frame (e.g., a management frame) sent by an AP or client device to terminate a connection in the network. In some embodiments, a deauthentication frame serves as a notification, which does not require an acknowledge message. As used herein, a disassociation frame is a frame (e.g., a management frame) sent by an AP or client device that terminates a connection in the network and terminates an association between two devices (an AP and a client device). Once a client device is associated to an AP, either the client device or the AP can terminate the association at any time by sending a disassociation frame. A disassociation frame can have the same or similar frame format as a deauthentication frame.

An ACK frame may refer to an acknowledgement message that acknowledges the receipt of a frame, and a block ACK frame may refer to an acknowledgement message that acknowledges the receipt of a number of frames. A broadcast deauthentication/disassociation frame may refer to a deauthentication frame or disassociation frame that is intended to be received and processed by every client device connected to the AP. In some embodiments, broadcast deauthentication frame or disassociation frame has a hexadecimal MAC address of FF-FF-FF-FF-FF-FF. A deauthentication/disassociation may refer to deauthentication, disassociation, or both, and a deauthentication /disassociation frame may refer to a deauthentication frame, a disassociation frame, or both a deauthentication frame and a disassociation frame. A deauthenticated or disassociated frame may refer to a data frame (e.g., a class 2 frame or class 3 frame) that has been received from device that is not authenticated or disassociated, respectively. A deauthenticated or disassociated frame can be provided from a device that was previously authenticated and/or associated but has been disassociated using a disassociation procedure or deauthenticated using a deauthentication procedure.

A client device can send a disassociation frame because the client devices is leaving a current AP to roam to another AP. The AP or client device receiving the deauthentication frame or disassociation frame can send an acknowledge message in response to receipt of such a frame. In some embodiments, a STA can disassociate from one AP and associate to a new AP while staying authenticated to the same network. In some embodiments, the deauthentication frame and disassociation frame can be 802.11 management frames as defined by the 802.11 standard and can include a reason code indicating a reason for the deauthentication or disassociation. Example reason codes for a deauthentication frame include but are not limited to: 1. Unspecified reason; 2. Previous authentication no longer valid; 3. Deauthenticated because sending STA is leaving (or has left) the BSS; 4. Disassociated due to inactivity; 5. Disassociated because AP is unable to handle all currently associated STAs; 6. Class 2 frame received from nonauthenticated STA; 7. Class 3 frame received from disassociated STA; 8. Disassociated because sending STA is leaving (or has left) BSS; 9. STA requesting (re)association is not authenticated with responding STA; 10. Disassociated because the information in the Power Capability element is unacceptable; 11. Disassociated because the information in the Supported Channels element is unacceptable; 12. Disassociated due to BSS transition management; 13. Invalid element, i.e., an element defined in this standard for which the content does not meet the specifications in Clause 9; 14. Message integrity code (MIC) failure; 15. 4-way handshake timeout; 16. Group key handshake timeout; 17. Element in 4-way handshake different from (Re) Association Request/Probe Response/Beacon frame; 18. Invalid group cipher; 19. Invalid pairwise cipher; 20. Invalid AKMP; 21.Unsupported RSNE version; 22. Invalid RSNE capabilities; 23.IEEE 802.1X authentication failed; 24. Cipher suite rejected because of the security policy; 25. TDLS direct-link teardown due to TDLS peer STA unreachable via the TDLS direct link; 26. TDLS direct-link teardown for unspecified reason; 27. Disassociated because session terminated by SSP request; 28. Disassociated because of lack of SSP roaming agreement; 29. Requested service rejected because of SSP cipher suite or AKM requirement; 30. Requested service not authorized in this location; 31. TS deleted because QoS AP lacks sufficient bandwidth for this QoS STA due to a change in BSS service characteristics or operational mode (e.g., an HT BSS change from 40 MHz channel to 20 MHz channel); 32. Disassociated for unspecified, QoS-related reason; 33. Disassociated because QoS AP lacks sufficient bandwidth for this QoS STA; 34. Disassociated because excessive number of frames need to be acknowledged, but are not acknowledged due to AP transmissions and/or poor channel conditions; 35. Disassociated because STA is transmitting outside the limits of its TXOPs; 36. Requesting STA is leaving the BSS (or resetting); 37. Requesting STA is no longer using the stream or session; 38. Requesting STA received frames using a mechanism for which a setup has not been completed; 39. Requested from peer STA due to timeout; 46. In a Disassociation frame: Disassociated because authorized access limit reached; 47. In a Disassociation frame: Disassociated due to external service requirements; 48. Invalid FT Action frame count; 49. Invalid pairwise master key identifier (PMKID); 50. Invalid MDE; 51. Invalid FTE; 52. Mesh peering canceled for unknown reasons; 53. The mesh STA has reached the supported maximum number of peer mesh STAs; 54. The received information violates the Mesh Configuration policy configured in the mesh STA profile; 55. The mesh STA has received a Mesh Peering Close frame requesting to close the mesh peering; 56. The mesh STA has resent dot11MeshMaxRetries Mesh Peering Open frames, without receiving a Mesh Peering Confirm frame; 57. The confirm Timer for the mesh peering instance times out; 58. The mesh STA fails to unwrap the GTK or the values in the wrapped contents do not match; 59. The mesh STA receives inconsistent information about the mesh parameters between mesh peering Management frames; 60. The mesh STA fails the authenticated mesh peering exchange because due to failure in selecting either the pairwise cipher suite or group cipher suite; 61. The mesh STA does not have proxy information for this external destination; 62. The mesh STA does not have forwarding information for this destination; 63. The mesh STA determines that the link to the next hop of an active path in its forwarding information is no longer usable; 64. The Deauthentication frame was sent because the MAC address of the STA already exists in the mesh BSS; 65. The mesh STA performs channel switch to meet regulatory requirements; 66. The mesh STA performs channel switching with unspecified reason; 67. Transmission link establishment in alternative channel failed; and 68. The alternative channel is occupied. Disassociation frames can have a similar structure with similar reasons codes.

Systems and methods can advantageously provide the deauthentication/disassociation frames on other channels besides the current primary control channel. In some embodiments, the AP is configured to overcome dead lock situations by duplicating and transmitting deauthentication and/or disassociation frames on all the subband channels in the wider bandwidth or on the subband channels where the class 3 frames are received from the non-associated client devices so that client devices can receive the deauthentication and/or disassociation frames that overlap with the primary channel and take the appropriate actions. This operation overcomes disadvantages associated with conventional APs in some embodiments. In some embodiments, the client devices recover from the deadlock situations by taking some follow-up actions to disconnect/reconnect/roam to acquire a valid data connection quickly (e.g., as quickly as feasibly possible). In some embodiments, the AP and client devices can operate under the 802.11 standards under Section 11.3.4.1 with an amendment to mandate the transmission of deauthentication and/or disassociation frames with applicable reason code on all the sub-band channels in the wider bandwidth or in the sub-band channels where the class 2/class 3 frames received from the non-associated clients. In some embodiments, the AP is configured to provide unicast or broadcast deauthentication and/or disassociation frames that can be duplicated and transmitted across all the sub-band channels in the wider bandwidth or on the sub band channels where the class2/class 3 frames are received from the non-associated client devices.

Some embodiments relate to a method. The method includes providing, by a first device, a disassociation frame or a deauthentication frame on a first primary control channel in response to an indication of a change from the first primary control channel to a second primary control channel. The method also includes receiving by the first device a data frame from a second device on the first control primary channel, the second primary control channel or a secondary channel. The method also includes providing, by the first device, another disassociation frame or deauthentication frame on the first primary control channel, the second primary control channel or the secondary channel associated with the data frame.

In some embodiments, the another disassociation frame is provided as a broadcast frame. In some embodiments, the first device and the second device operate according to an 802.11 protocol. In some embodiments, the another deauthentication frame is provided as a broadcast frame. In some embodiments, the first device and the second device operate according to an 802.11e protocol.

In some embodiments, the data frame is provided in a wider band including the first primary control channel, the second primary control channel or the secondary channel associated with the data frame. In some embodiments, the data frame is a class 3 frame. In some embodiments, the data frame is a class 2 frame.

In some embodiments, the method further includes providing an acknowledge frame from the first device to the second device in response to the data frame on one of the first primary control channel, the second primary control channel or the secondary channel associated with reception of the data frame.

Some embodiments relate to a device. The device includes circuitry configured to provide a disassociation frame or a deauthentication frame on a first primary control channel in response to an indication of a change of operation of the device from the first primary control channel to a second primary control channel. The circuitry is: 1) configured to provide another disassociation frame or deauthentication frame on one of the first primary control channel, the second primary control channel or a secondary channel in response to a deauthenticated or disassociated frame being received on one of the first primary control channel, the second primary control channel or the secondary channel, wherein the one of the first primary control channel, the second primary control channel or the secondary channel is associated with reception of the deauthenticated or disassociated frame; or 2) configured to provide the another disassociation frame or deauthentication frame on each of the first primary control channel, the second primary control channel or the secondary channel in response to the deauthenticated or disassociated frame being received on any of the first primary control channel, the second primary control channel or the secondary channel.

In some embodiments, the device is an AP providing communication according to an 802.11 protocol. In some embodiments, the another disassociation frame or deauthentication frame is provided with the indication that the deauthenticated or disassociated frame has been received. In some embodiments, the circuitry is configured to provide the another disassociation frame or deauthentication frame on one of the first primary control channel, the second primary control channel or the secondary channel in response to the deauthenticated or disassociated frame being received on one of the first primary control channel, the second primary control channel or the secondary channel. In some embodiments the circuitry is configured to perform both operations 1 and 2 above.

In some embodiments, the circuitry is configured to provide the another disassociation frame or deauthentication frame on each of the first primary control channel, the second primary control channel or the secondary channel in response to the deauthenticated or disassociated frame being received on any of the first primary control channel, the second primary control channel or the secondary channel.

In some embodiments, the circuitry is part of a media access layer or a physical layer. In some embodiments, the device is an AP for an 802.11 standard wireless network.

Some embodiments relate to a method. The method includes providing, by a first device, a disassociation frame or a deauthentication frame on a first primary control channel in response to an indication of a change from the first primary control channel to a second primary control channel. The method also includes receiving a data frame, by the first device, from a second network device on the first primary control channel, the second primary control channel or a secondary channel of a number of secondary channels. The first primary control channel, the second primary control channel and the secondary channels are part of wider bandwidth channel. The method further includes providing, by the first device, another disassociation frame or deauthentication frame on the first primary control channel, the second primary control channel and the secondary channels.

In some embodiments, the first primary control channel, the second primary control channel, and the secondary channels form an entire wider bandwidth channel. In some embodiments, the disassociation frame or deauthentication frame is provided in response to receiving the data frame, and the data frame is an unauthenticated data frame. In some embodiments, the first primary control channel is a 20 MHz bandwidth channel.

Some embodiments relate to a device including circuitry configured to provide a disassociation frame or a deauthentication frame on a first primary control channel in response to an indication of a change from the first primary control channel to a second primary control channel. The circuitry is also configured to provide another disassociation frame or deauthentication frame on the first primary control channel, the second primary control channel or a secondary channel in response receiving a data frame on the first control primary channel, the second primary control channel or the secondary channel from another device.

In some embodiments, the another disassociation frame or deauthentication frame is provided as a broadcast frame. In some embodiments, the circuitry is configured to provide the disassociation frame or deauthentication frame according to an 802.11 protocol. In some embodiments, the circuitry is configured to provide the another deauthentication frame as a broadcast frame. In some embodiments, the circuitry is configured to provide the disassociation frame or deauthentication frame according to an 802.11e protocol. In some embodiments, the data frame is provided in a wider band comprising the first primary control channel, the second primary control channel or the secondary channel associated with the data frame. In some embodiments, the circuitry is configured to provide an acknowledge frame on one of the first primary control channel, the second primary control channel or the secondary channel in response to the data frame. In some embodiments, the data frame is a class 3 frame. In some embodiments, wherein the data frame is a class 2 frame.

### A. Computing and Network Environment

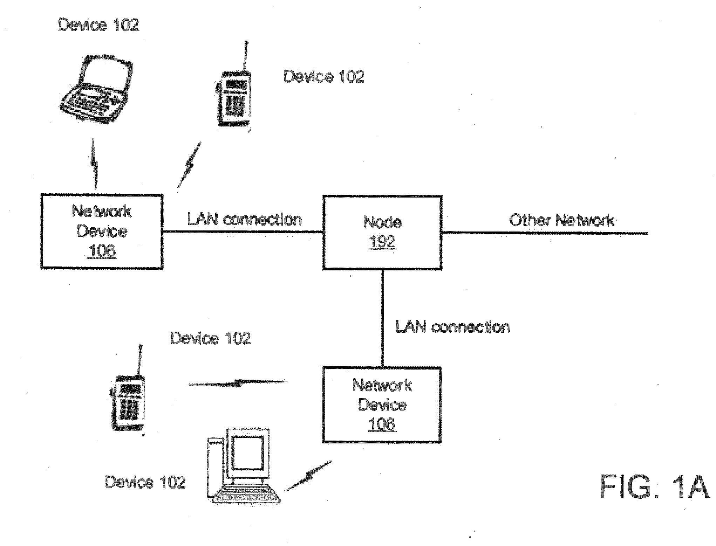

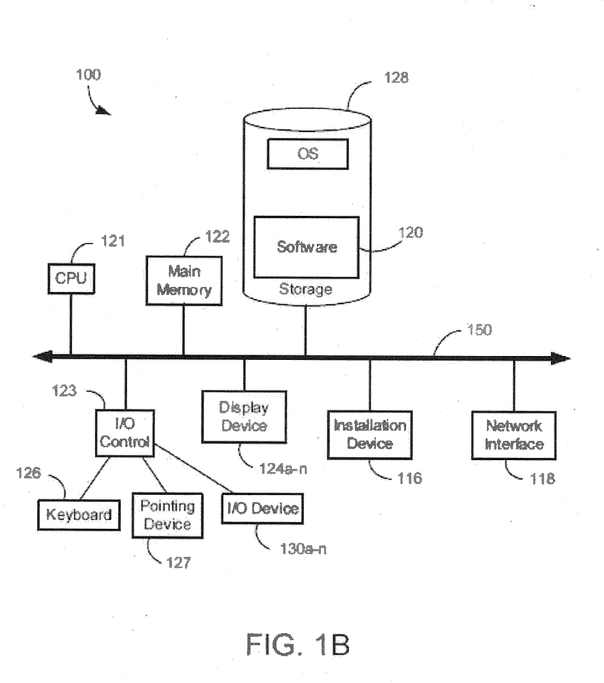

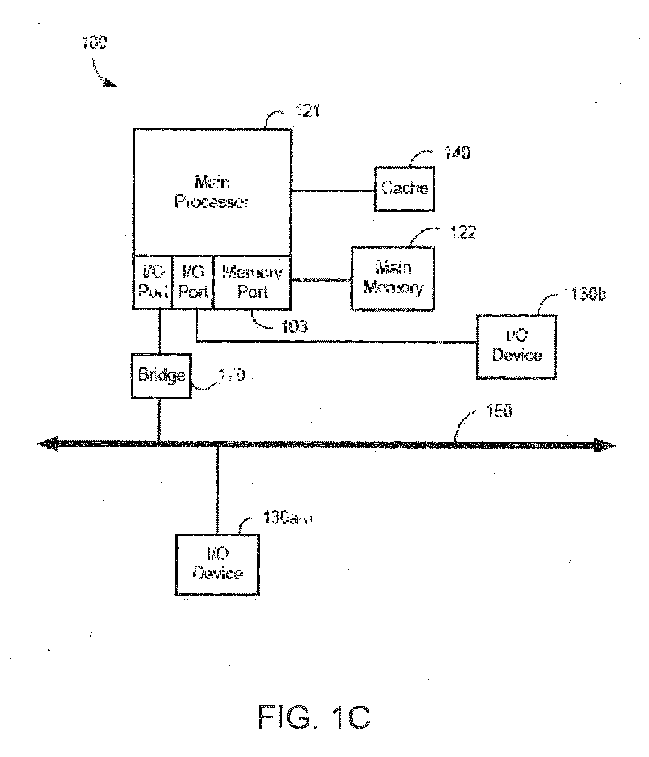

Prior to discussing specific embodiments of the present solution, it can be helpful to describe aspects of the operating environment as well as associated system components (e.g., hardware elements) in connection with the methods and systems described herein. Referring to FIG. 1A, an embodiment of a network environment is depicted. In brief overview, the network environment includes a wireless communication system that includes one or more access points (APs) or network devices 106, one or more client devices (e.g., STAs) or wireless communication devices 102 and a network hardware component or network hardware 192. The wireless communication devices 102 can for example include laptop computers, tablets, personal computers, and/or cellular telephone devices. The details of an embodiment of each station or wireless communication device 102 and AP or network device 106 are described in greater detail with reference to FIGS. 1B and 1C. The network environment can be an ad hoc network environment, an infrastructure wireless network environment, a subnet environment, etc. in one embodiment. The network devices 106 or APs can be operably coupled to the network hardware 192 via local area network connections. Network devices 106 are 5G base stations in some embodiments. The network hardware 192, which can include a router, gateway, switch, bridge, modem, system controller, appliance, etc., can provide a local area network connection for the communication system. Each of the network devices 106 or APs can have an associatcd antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

In some embodiments, a network device 106 or AP includes a device or module (including a combination of hardware and software) that allows wireless communication devices 102 to connect to a wired network using wireless-fidelity (WiFi), or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect to a router (e.g., via a wired network) as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other devices 102 to utilize that wired connection. A network device 106 or AP can be implemented to support a standard for sending and receiving data using one or more radio frequencies. Those standards, and the frequencies they use can be defined by the IEEE (e.g., IEEE 802.11 standards). A network device 106 or AP can be configured and/or used to support public Internet hotspots, and/or on a network to extend the network's Wi-Fi signal range.

In some embodiments, the access points or network devices 106 can be used for (e.g., in-home, in-vehicle, or in-building) wireless networks (e.g., IEEE 802.11, Bluetooth, ZigBee, any other type of radio frequency based network protocol and/or variations thereof). Each of the wireless communication devices 102 can include a built-in radio and/or is coupled to a radio. Such wireless communication devices 102 and /or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106.

The network connections can include any type and/or form of network and can include any of the following: a point-to-point network,, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 102 and access point(s) or network devices 106 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 102 or network device 106. As shown in FIGS. 1B and 1C, each computing device 100 includes a processor 121 (e.g., central processing unit), and a main memory unit 122. As shown in FIG. 1B, a computing device 100 can include a storage device 128, an installation device 116, a network interface 118, an I/O controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more input/output devices 130a-130n, and a cache memory 140 in communication with the central processing unit or processor 121.

The central processing unit or processor 121 is any logic circuitry that responds to and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus (e.g., system bus 150). Various buses can be used to connect the central processing unit or processor 121 to any of the I/O devices 130, for example, a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, trackpads, trackballs, microphones, dials, touch pads, touch screen, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, USB device, hard-drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.11ad, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a FibreChannel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smart phone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

Aspects of the operating environments and components described above will become apparent in the context of the systems and methods disclosed herein.

### B. Client Device and AP Communication

Disclosed herein are systems for and a methods that can be used in any communication system including but not limited to Wi-Fi networks. The systems and methods can be used with an AP in a communication network where there are class 3 frames or class 2 frames received from non-associated or non-authenticated (e.g., previously associated or previously authenticated) client devices or STAs during wider bandwidth receptions. Although disassociation and deauthentication frames and protocols under the 802.11 standard are described herein, the systems and methods can be used with other disassociation and deauthentication messages and protocols including but not limited to such protocols used in other networks (cellular networks) and in point to point communications. The systems and methods can be used with only disassociation protocol, only a deauthentication protocol, or both.

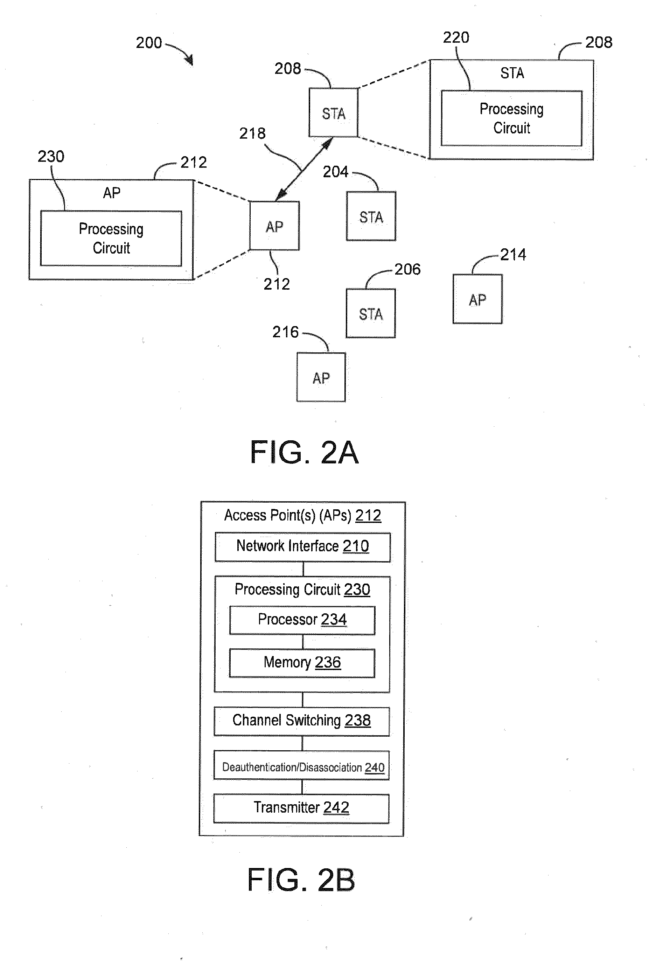

With reference to FIG. 2A, a wireless communication network or system 200 includes client devices or STAs 202, 204, 206, and 208 and APs 212, 214, and 216. STAs 202, 204, 206, and 208 and APs 212, 214, and 216 can be used in the systems discussed with reference to FIGS.1A-C. Any number of STAs 202, 204, 206, and 208 and APs 212, 214, and 216 can be used in the network or system 200. As used herein, a station or STA is any device for communicating in communication system 200 and includes but is not limited to a fixed, portable, or mobile laptop, desktop personal computer, personal digital assistant, work station, wearable device, smart phone, or Wi-Fi phone. As used herein an access point or AP refers to a device for communicatively coupling one or more non-AP devices (e.g., a client device or STA) to a network. More specifically, an AP may enable non-AP devices to connect and communicate with a network. In some embodiments, an AP is a wireless access point (WAP) configured to enable wireless communication between non-AP devices. An AP includes but is not limited to a mobile, portable, or fixed hot spot, router, bridge, or other communication device. An AP can provide services to a STA, such as serving as a connection point to another network. STAs 202, 204, 206, and 208 and APs 212, 214, and 216 can each include a wireless transceiver and a various modules for communicating via connections. The modules can be software (e.g., firmware) and/or hardware components. In some embodiments, each of STAs 202, 204, and 206 and APs 212, 214, and 216 includes an IEEE 802.11 conformant media access control (MAC) layer circuit and physical (PHY) layer interface to the wireless medium and can be part of a larger device or system. In some embodiments, each of STAs 202, 204, 206, and 208 and APs 212, 214, and 216 operates according to other standards than IEEE 802.11.

A connection for wireless communication can be established between at least one of STAs 202, 204, 206, and 208 and APs 212, 214, and 216 after authentication and association. For example, STA 202 has a connection 218 to AP 212. STAs 202, 204, 206, and 208 each include circuitry (e.g., a processor or processing circuit 230), and APs 212, 214, and 216 each include circuitry (e.g., a processing circuit 220) for establishing and cancelling the connection 218 and communicating data across the connection. The connection 218 is a wireless connection formed using an association and authorization operation and cancelled using a disassociation and deauthentication operation in some embodiments.

Referring to FIG. 2B, an AP 212 is configured for dynamic subband operations and adaptive disassociation and/or deauthentication operations according to some embodiments. In some embodiments, the AP 212 includes a network interface 210, processing circuit 230, a processor 234, a memory 236, a channel switching module 238, a disassociation/deauthentication module 240, and a transmitter 242. The processing circuit 230 is any circuitry or components that can perform logic and communication processing.

In some embodiments, the processing circuit 230 is implemented as a field-programmable gate array, an application-specific integrated circuit, hardware, a software executing processor, or state machines. In some embodiments, the processing circuit 230 is part of layers (e.g., MAC, network, PHY layers) of IEEE 802.11 standard devices. The processing circuit 230 can be configured to perform communication operations, frame building and processing, association operations, authorization operations, connection setup, disassociation operations, and deauthentication operations in some embodiments. Instructions for the processing circuit 230 are stored in a non-transitory medium such as memory 236 in some embodiments. Processing circuit 220 of STA 202 is similar to processing circuit 230.

The memory 236 may be one or more devices (e.g., RAM, ROM, Flash memory, hard disk storage) for storing data and/or computer code for completing and/or facilitating the various processes described herein. The memory 236 may be or include non-transient volatile memory, non-volatile memory, and non-transitory computer storage media. Memory 216 may include database components, object code components, script components, or any other type of information structure for supporting the various activities and information structures described herein. Memory 236 may be communicably coupled to the processor 234 and include computer code or instructions for executing one or more processes described herein. The processor 234 may be implemented as one or more application specific integrated circuits (ASICs), field programmable gate arrays (FPGAs), a group of processing components, a software executing processor, state machines or other suitable electronic processing components. As such, AP or network device 106 is configured to run a variety of modules and/or programs and store associated data in a database of the memory 236. The modules (e.g., 238 and 242) can be implemented in AP software (e.g., MAC layer or PHY layer software) or STA software (e.g., MAC layer or PHY layer software).

In some embodiments, the network interface 210 is structured and used to establish connections with other computing systems and devices (e.g., wireless communication device(s) 102, network hardware 192, other access points or network devices 106, (FIGS. 1A-C) via a network (e.g., WAN connection, LAN connection, WLAN connection, etc.). The network interface 210 includes program logic that facilitates connection of the AP 212 to the network connections. For example, the network interface 210 may include any combination of a wireless network transceiver (e.g., a cellular modem, a Bluetooth transceiver, a Wi-Fi transceiver, transmitter 242, etc.) and/or a wired network transceiver (e.g., an Ethernet transceiver). In some arrangements, the network interface 210 includes the hardware (e.g., processor, memory, and so on) and machine-readable media sufficient to support communication over multiple channels of data communication. As used herein a network interface or network interface circuit is any circuit or circuitry (with or without software) configured to establish connections with other computing systems. The network interface 210 can include a physical layer circuitry necessary for communicating with a data link layer standard, such as Ethernet or Wi-Fi. The circuit can prepare and control the flow of data on the network.

In some embodiments, processing circuit 230 or AP 212 includes a channel switching module 238 (sometimes referred to as a "channel switching circuit"). The channel switching module 238 can be configured to communicatively coupling with one or more client devices (e.g., non-AP devices 102 or STAs 202, 204, 206, and 208 (FIG. 2A)) and can be configured to allocate the one or more devices 102 on one of a primary bandwidth channel or a secondary bandwidth channel. In particular, the channel switching module 238 can be configured to perform the dynamic subband operations. For example, the channel switching module 238 can be configured to determine a network traffic of the devices 102. Accordingly, the channel switching module 238 may utilize a channel switching protocol to improve network traffic (e.g., uplink traffic and downlink traffic) from the AP 212 to the device(s) 102. That is, device(s) 102 may be split between different parts of the 320 MHz spectrum, on different channels. The channel switch protocol includes moving between primary and secondary channels. In particular, channel switching module 238 enable an AP 212 to dynamically switch devices 102 between channels based on, for example actual network traffic and/or expected network traffic. For example, the channel switching module 238 can be configured to switch the device 102 (FIG. 1) (or AP 212) from a primary bandwidth channel to operate on a secondary bandwidth channel. In particular, the channel switching module 238 can determine if a device 102 or AP 212 should switch channels based on (i) a bandwidth availability and (ii) a quality of service requirement. As used herein, a channel switching circuit or unit is any circuit or circuitry (with or without software) configured to designate one or more devices to communicate on a channel or portion of a channel (including but not limited to a primary control channel). As used herein, a channel switching circuit or unit is any circuit or circuitry (with or without software) configured to designate one or more devices to communicate on a channel or portion of a channel.

In various embodiments, processing circuit 230 or AP 212 includes a transmitter 242 (sometimes referred to as a "transmitter circuit"). The transmitter 242 provides transmissions via the network interface 210 to network connections (e.g., devices 102, network hardware 192) using various networking protocols. In some embodiments, the transmitter 242 can also be configured to perform channel-sounding. Channel sounding can include the transmission (e.g., by transmitter 242) of a null-data-packet announcement (NDPA) frame followed by a null-data-packet (NDP), or an initial control frame or an initial control frame exchange. Transmitter 242 is any circuit for communicating radio frequency data, such as data in frames. In some embodiments, the transmitter 242 provides disassociation and/or deauthentication frames and acknowledgements thereof.

In some embodiments, processing circuit 230 or AP 212 includes disassociation/deauthentication module 240. The disassociation/deauthentication module 240 is configured to cause transmitter 242 to provide disassociation and/or deauthentication frames and acknowledgements thereof. In some embodiments, disassociation/deauthentication module 240 only provides one of a disassociation frame or deauthentication frame. In some embodiments, disassociation/deauthentication module 240 is configured to provide the disassociation and/or deauthentication frames in response to a condition when AP is required to change its primary channel to a subband channel within the wider bandwidth. In some embodiments, the disassociation/deauthentication module 240 is provided in client devices (e.g., STAs 202, 204, 206, 208 (FIG. 2A)).

In some embodiments, disassociation/deauthentication module 240 is configured to duplicate or copy the disassociation and/or deauthentication frames for transmission on all the sub-band channels in the wider bandwidth or on the subband channels where class 3 frames are received from the non-associated clients so that STAs 204, 206, and 208 can receive the deauthentication and/or disassociation frames that overlap with its primary channel and take the appropriate actions. In some embodiments, disassociation/deauthentication module 240 is configured to duplicate or copy the disassociation and/or deauthentication frames on the subband channels where class 2 frames are received from the non-associated STAs so that STAs can receive the deauthentication and/or disassociation frames that overlap with its primary channel and take the appropriate actions. As used herein a class 3 frame refers to a frame that will be accepted after association and authentication have been completed. Class 3 frames include data frames, management frames, and control frames. As used herein, a class 2 frame refers to a frame that will be accepted after authentication has been completed. Class 2 frames include management frames and control frames. Modules 238 and 240 can be implemented in AP software (e.g., MAC and PHY layer software). Disassociation/deauthentication module 240 can advantageously prevent dead lock situations associated with conventional APs in some embodiments.

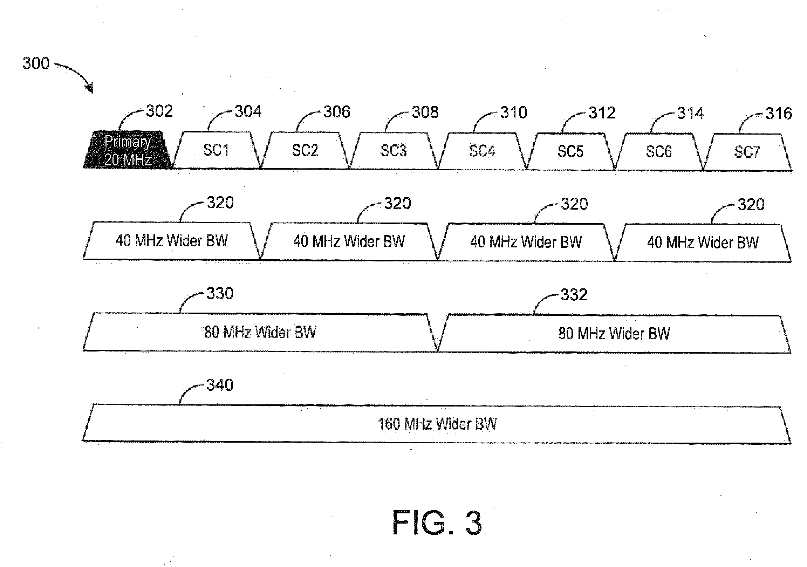

With reference to FIG. 3, AP 212 can communicate with STA 204 using a channel 300 in some embodiments. Channel 300 includes a primary control subband 302 (e.g., 20 MHz), a secondary subband 304 (e.g., 20 MHz), a secondary subband 306 (e.g., 20 MHz), a secondary subband 308 (e.g., 20M Hz), a secondary subband 310 (e.g., 20MHz), a secondary subband 312 (e.g., 20 MHz), a secondary subband 314 (e.g., 20 MHz), and a secondary subband 316 (e.g., 20 MHz). Any of secondary subbands 304-316 can be a primary control subband, and primary control subband 302 can be changed to a secondary subband. Channel 300 can also be apportioned as a single wider bandwidth 340 (e.g., 160 MHz), as a wider bandwidth 330 (e.g., 80 MHz) and a wider bandwidth 332, (e.g., 80 MHz). Channel 300 can also be apportioned as a wider bandwidth 320 (e.g., 40 MHz), a wider bandwidth 322 (e.g., 40 MHz), a wider bandwidth 324 (e.g., 40 MHz), and a wider bandwidth 326 (e.g., 40 MHz). Communications can occur on any subband 302-316 or wider bandwidths 320-340. Subbands 302-316 and wider bandwidths 320 -340 can be referred to as channels, subbands, bandwidths, or bandwidth channels.

In some embodiments, channel 300 is an IEEE 802.11 wider bandwidth channel for infrastructure configured for BSS operations. In some embodiments, subbands 302-316 and wider bandwidths 320-340 are classified into two categories: a primary control channel (e.g., the common channel of operation for all stations (STAs) that are members of the BSS) and secondary channels. For example, in a 20 MHz, 40 MHz, 80 MHz, 160 MHz or 80+80 MHz, and 320 MHz bandwidth BSS, the primary control channel is a 20 MHz channel. The primary control channel is used for transmitting all the management frames including but not limited to beacon frames, probe request/response frames, association request/response frames, deauthentication frames, disassociation frames, etc. in some embodiments. The primary channel can be a core frequency segment for the BSS or AP in some embodiments. The secondary channels/sub-band channels (SCs) include the neighboring channels of the primary channel. In the wider bandwidth examples, although the STA 208 and AP 212 can listen on the entire wider bandwidth (e.g., bandwidths of 40/80/160/320 MHz), the management frames such as beacon, probe response, deauthentication/disassociation frames etc., are received at STA 208 only if those frames are transmitted on the primary 20 MHz control channel of the wider bandwidth and all other management frames that are transmitted in the non-primary channels are filtered at the stations at the PHY level as described in the IEEE 802.11 standard under section 23.3.20. For example, section 23.3.20, describes a PHY receive procedure where the PHY shall not issue a PHY-RXSTART.indication primitive in response to a physical layer protocol data unit (PPDU) that does not overlap the primary channel. The PHY-RXSTART.indication primitive notifies the MAC layer that a data packet is now arriving and can be used to reconfigure the physical medium dependent layer for a new rate and modulation scheme.

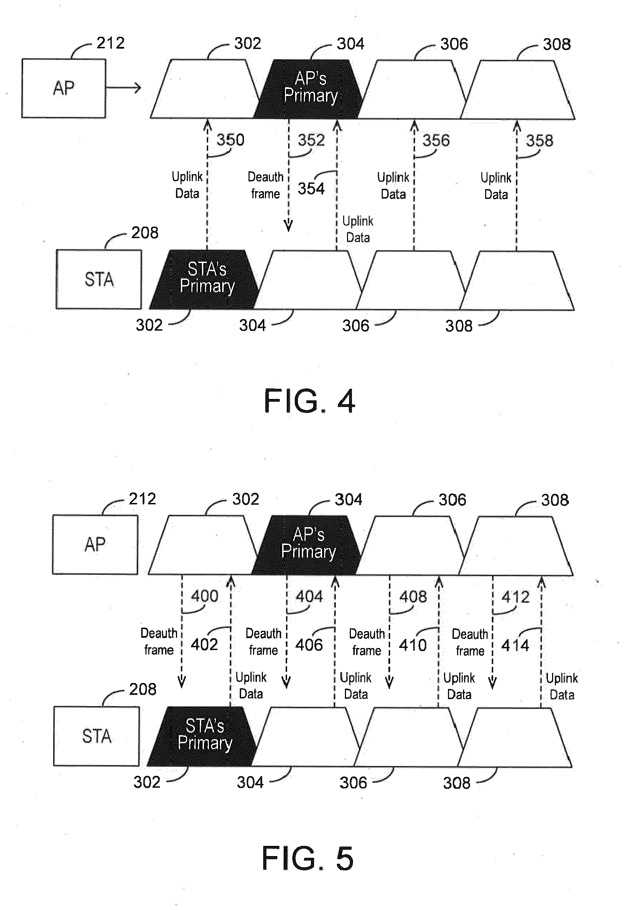

With reference to FIG. 4, AP 212 can communicate with STA 208 using bandwidth or channel 300 in some embodiments. STA 208 provides uplink data 350 to AP 212 via subband 302 which is the primary control channel for STA 208 and AP 212 in some embodiments. When the AP 212 is forced to or chooses to change the primary control channel from subband 302 to another subband (e.g., subband 304), AP 212 sends a broadcast deauthentication/disassociation frame 348 in order to disconnect all the client devices (including STA 208) connected to AP 212 on the current primary channel (subband 302) so that the client devices can reconnect to the AP 212 on a new primary channel (e.g., subband 304). AP 212 can be forced to change primary control channels due to interference on the channel. An indication of the change can be generated internally by AP 212 or received from other APs or devices (e.g., STAs 202, 204, 206, and 208 (FIG. 2A). The indication can be processed in the MAC layer. Various channel selection algorithms can be used to choose a new primary control channel or indicate that a change is needed or forthcoming. In some embodiments, AP 212 selects a new channel based upon a number of BSS identifications on a channel, received signal strength indications, non-Wi-Fi utilization, and/or channel overlap and bonding parameters.

If STA 208 is in a sleep mode at the time AP 212 transmits the deauthentication/disassociation frame 348 on subband 302, STA 208 considers that the association with AP 212 is still valid on the associated primary channel (e.g., subband 302) and continues to send uplink data traffic on the associated wider bandwidth (e.g., uplink data 354, 356, and 358 on respective subbands 304, 306, and 308) when STA 208 wakes up from the sleep mode. Whenever the AP 212 receives uplink data 354, 356, and 358 (e.g., in the form of data frames) due to its wider bandwidth reception and a receiver address (RA) match, the AP 212 sends the ACK/BlockACK frames (acknowledge and block acknowledge messages) on the sub-band channels where the data frames are received followed by deauthentication/disassociation frame 352 only on its current primary control channel (subband 304) with reason 7 (Class 3 frame received from no associated station) as described in the IEEE 802.11specification. Section 11.3.4 Authentication and deauthentication states: "11.3.4.1 General ..... If STA A in an infrastructure BSS receives a Class 2 or Class 3 frame from STA B that is not authenticated with STA A (i.e., the state for STA B is State 1), STA A shall discard the frame. If the frame has an individual address in the Address 1 field, the MLME of STA A shall send a Deauthentication frame to STA B .... Reason code Name Meaning 7 INVALID_CLASS3_FRAME Class 3 frame received from nonassociated STA." Client devices that receive these ACK/BlockACK messages from the AP 212 on the associated primary channels assume that the AP 212 is still available in the vicinity but not available on the associated primary control channel anymore. Follow-up deauthentication/disassociation frames from AP 212 are not received by STA 208 because the frames are only transmitted on the current primary control channel (subband 304) that does not overlap with the primary control channel of the STA 208. This sequence can lead to a deadlock situation.

With reference to FIG. 5, AP 212 and/or STA 208 can use systems and methods to avoid a deadlock situation in some embodiments. AP 212 can communicate with STA 208 using channel 300 in some embodiments. STA 208 provides uplink data 402 to AP 212 via subband 302 which is the primary control channel for STA 208. The primary control channel for AP 212 is subband 302. When the AP 212 is forced to change the primary control channel from subband 302 to another subband (e.g., subband 304), AP 212 sends deauthentication/disassociation frame 400 (e.g., as a broadcast deauthentication/disassociation frame) in order to disconnect all the client devices (including STA 208) connected to AP 212 on the current primary channel (subband 302) so that the client devices can reconnect to the AP 212 in a new primary channel (e.g., subband 304). If STA 208 is in a sleep mode at the time AP 212 transmits the deauthentication/disassociation frame 400 on subband 302, STA 208 considers that the association with AP 212 is still valid on the associated primary control channel (e.g., subband 302) and continues to send uplink data traffic on the associated wider bandwidth (e.g., uplink data 406, 410, and 414 on respective subbands 304, 306, and 308) when STA 208 wakes up from the sleep mode. Whenever the AP 212 receives uplink data 406, 410, and 414 (e.g., in the form of data frames) due to its wider bandwidth reception and a receiver address (RA) match, the AP 212 sends the ACK/BlockACK frames (acknowledge and block acknowledge messages) on the sub-band channels where the data frames are received and sends deauthentication/disassociation frames 400, 404, 408, and 412 (e.g., as broadcast deauthentication/disassociation frames) which can be duplicates of each other provided by disassociation/deauthentication module 240 (FIG. 2B) in some embodiments. In some embodiments, deauthentication/disassociation frames 400, 404, 408, and 412 are sent on all the sub-band channels (e.g., subbands 302-316 in the wider bandwidth 340 (FIG. 3)) or on the sub band channels where the class 2 or 3 frames are received from the now non-associated clients (e.g., the subbands associated with uplink data 402, 406, 410, and 414). In some embodiments, deauthentication/disassociation frames 400, 404, 408, and 412 are sent using a unicast address directed to the STA by the RA of the STA that sent the deauthenticated or disassociated data. The provision of deauthentication/disassociation frames 400, 404, 408, and 412 allows all client devices to receive the deauthentication and/or disassociation frames on subbands (e.g., subbands 302, 304, 306, and 308) that overlap with their primary channels and take the appropriate actions (e.g., follow actions to disconnect/reconnect/roam to acquire a new valid data connection as quickly as possible) in some embodiments. Deauthentication/disassociation frames 400, 404, 408, and 412 are one or more of a disassociation frame, a deauthentication frame, or both a disassociation frame and a deauthentication frame.

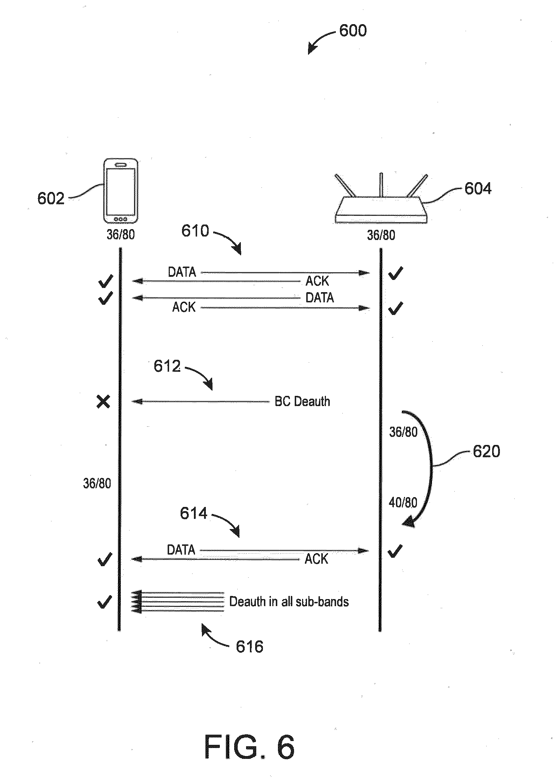

With reference to FIGS. 6, a flow 600 is used for a connection between a STA 602 and an AP 604 on a wider bandwidth (e.g., an 80 MHz wide bandwidth). In some embodiments, STA 602 (e.g., at least one of STAs 202, 204, and 206) and AP 604 (e.g., at least one of APs 212, 214, and 216) use a primary control subband aligned at channel 36 having a bandwidth of 20 MHz in a wider channel having an 80 MHz bandwidth to exchange frames 610. Frames 610 include class 3 frames which include data frames and acknowledge frames in some embodiments. At an operation 620, the primary control subband of AP 604 is moved from channel 36 to channel 40 having a bandwidth of 20 MHz in a wider channel having an 80 MHz bandwidth in the 5GHz band. AP 212 can use the same wide bandwidth but use a different 20 MHz primary control sub-band in some embodiments. AP 604 deauthenticates and/or disassociates all client devices including STA 602 by sending a broadcast deauthentication/disassociation frame 612 on the primary control subband aligned at channel number 36 in a 20 MHz subband in the 5GHz band. STA 602 may not receive the deauthentication/disassociation frame 612 (e.g., due to being in sleep mode) and may send a wide band data message 614 (e.g., a class 2 or class 3 frame) and receive an acknowledge message from AP 212 when STA 602 wakes from the sleep mode. In response to the data message 614, AP 604 sends broadcast deauthentication/disassociation frames 618 (e.g., with indication 7. Class 3 frame received from disassociated STA or with indication 6. Class 2 frame received from nonauthenticated STA) on the all subbands upon which class 3 or class 2 frames are received from unauthenticated or disassociated STAS.

Client devices such as STA 602 receive one of deauthentication/disassociation frames 616 on its primary subband and senses the connection loss and attempts to reestablish connection aligned at 40 in the 80 MHZ wide bandwidth. Advantageously, AP 604 can reduce the time to reestablish a connection by using broadcast deauthentication/disassociation frames 616 on the all subbands upon which class 3 frames are received. If the broadcast deauthentication/disassociation frames 616 on all subbands upon which class 3 or class 2 frames are received are not used, STA 602 and the AP 604 can continue to send and receive send a wide band data message 614 and receive an acknowledge message which can cause delays and waste communication bandwidth.

In some embodiments, broadcast deauthentication/disassociation frames 616 are unicast frames. Unicast frames refers to frames sent to a particular device identified by an RA. In some embodiments, the RA is determined from the source address of data message 614 or the RA of the acknowledge message. In some embodiments, the unicast frames are sent on all subbands upon which the data message or frame was sent.

It should be noted that certain passages of this disclosure can reference terms such as "first" and "second" in connection with subsets of frames, response, and devices, for purposes of identifying or differentiating one from another or from others. These terms are not intended to merely relate entities (e.g., a first device and a second device) temporally or according to a sequence, although in some cases, these entities can include such a relationship. Nor do these terms limit the number of possible entities (e.g., STAs, APs, beamformers and/or beamformees) that can operate within a system or environment. It should be understood that the systems described above can provide multiple ones of any or each of those components and these components can be provided on either a standalone machine or, in some embodiments, on multiple machines in a distributed system. Further still, bit field positions can be changed and multibit words can be used. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code. Circuitry may refer to any electronic circuits or circuits.

While the foregoing written description of the methods and systems enables one of ordinary skill to make and use embodiments thereof, those of ordinary skill will understand and appreciate the existence of variations, combinations, and equivalents of the specific embodiment, method, and examples herein. For example, specific values for bandwidths, channels and subbands discussed above are exemplary. The present methods and systems should therefore not be limited by the above described embodiments, methods, and examples, but by all embodiments and methods within the scope and spirit of the disclosure.

## Claims

1. A device, comprising:
circuitry configured to provide a disassociation frame or a deauthentication frame on a first primary control channel in response to an indication of a change from the first primary control channel to a second primary control channel and to provide another disassociation frame or deauthentication frame on the first primary control channel, the second primary control channel or a secondary channel in response receiving a data frame on the first control primary channel, the second primary control channel or the secondary channel from another device.

2. The device of claim 1, wherein the another disassociation frame or deauthentication frame is provided as a deauthentication/disassociation frame.

3. The device of claim 1, wherein the circuitry is configured to provide the disassociation frame or deauthentication frame according to an 802.11 protocol.

4. The device of claim 1, wherein the circuitry is configured to provide the another deauthentication frame as a deauthentication/disassociation frame.

5. The device of claim 1, wherein the circuitry is configured to provide the disassociation frame or deauthentication frame according to an 802.11e protocol.

6. The device of claim 1, wherein the data frame is provided in a first channel comprising the first primary control channel, the second primary control channel or the secondary channel associated with the data frame.

7. The device of claim 1, wherein the circuitry is configured to provide an acknowledge frame on one of the first primary control channel, the second primary control channel or the secondary channel in response to the data frame.

8. The device of claim 1 wherein the data frame is a class 3 frame.

9. The device of claim 1, wherein the data frame is a class 2 frame.

10. A device, comprising:
circuitry configured to provide a disassociation frame or a deauthentication frame on a first primary control channel in response to an indication of a change of operation of the device from the first primary control channel to a second primary control channel, wherein the circuitry is: 1) configured to provide another disassociation frame or deauthentication frame on at least one of the first primary control channel, the second primary control channel or a secondary channel in response to a deauthenticated frame or disassociated frame being received on the at least one of the first primary control channel, the second primary control channel or the secondary channel; or 2) configured to provide the another disassociation frame or deauthentication frame on each of the first primary control channel, the second primary control channel or the secondary channel in response to the deauthenticated or disassociated frame being received on any of the first primary control channel, the second primary control channel or the secondary channel.

11. The device of claim 10, wherein the device is an access point configured to provide communication according to an 802.11 protocol.

12. The device of claim 10, wherein the circuitry is configured to provide the another disassociation frame or deauthentication frame with an indication that the deauthenticated or disassociated frame has been received.

13. The device of claim 10, wherein the circuitry is configured to provide the another disassociation frame or deauthentication frame on one of the first primary control channel, the second primary control channel or the secondary channel in response to the deauthenticated or disassociated frame being received on one of the first primary control channel, the second primary control channel or the secondary channel.

14. The device of claim 10, wherein the circuitry is configured to provide the another disassociation frame or deauthentication frame on each of the first primary control channel, the second primary control channel or the secondary channel in response to the deauthenticated or disassociated frame being received on any of the first primary control channel, the second primary control channel or the secondary channel.

15. A method, comprising:
providing, by a first device, a disassociation frame or a deauthentication frame on a first primary control channel in response to an indication of a change from the first primary control channel to a second primary control channel;
receiving a data frame, by the first device, from a second device on the first primary control channel, the second primary control channel or a secondary channel of a plurality of secondary channels, wherein the first primary control channel, the second primary control channel and the plurality of secondary channels are at least part of a bandwidth channel; and
providing, by the first device, another disassociation frame or deauthentication frame on at least one of the first primary control channel, the second primary control channel and the plurality of secondary channels.
